**Europäisches Patentamt**

**European Patent Office**

**Office européen des brevets**

(11) Numéro de publication: **0 172 103**
**A1**

## (12) DEMANDE DE BREVET EUROPEEN

(21) Numéro de dépôt: **85401592.2**

(22) Date de dépôt: **02.08.85**

(51) Int. Cl.⁴: **C 03 C 17/10**
**B 60 R 13/06**

(30) Priorité: **03.08.84 FR 8412281**

(43) Date de publication de la demande:
**19.02.86 Bulletin 86/8**

(84) Etats contractants désignés:
**AT BE CH DE GB IT LI LU NL SE**

(71) Demandeur: **BOUSSOIS S.A.**
**126-130 rue Jules Guesde**
**F-92302 Levallois-Perret(FR)**

(72) Inventeur: **Hochart, Paul**
**3 Résidence de l'Orangerie**
**F-78170 La Celle Saint Cloud(FR)**

(74) Mandataire: **Bouju, André**
**Cabinet Bouju 38 avenue de la Grande Armée**
**F-75017 Paris(FR)**

(54) **Procédé pour appliquer un revêtement d'aluminium sur du verre et pare-brise ou lunette arrière obtenu.**

(57) Dans le procédé pour appliquer un revêtement d'aluminium ou d'alliage d'aluminium sur du verre, on pulvérise sur le verre de l'aluminium à l'état fondu au moyen d'un pistolet à flamme.

Avant pulvérisation, la surface du verre est portée à une température suffisante pour éliminer les molécules d'eau adsorbées sur cette surface. L'invention vise principalement à appliquer sur la surface d'un parebrise (1) un liseré d'aluminium (7) disposé entre le verre et le cordon de collage (9) du pare-brise et faisant office d'enjoliveur.

FIG.3

EP 0 172 103 A1

La présente invention concerne un procédé pour appliquer un revêtement d'aluminium ou d'alliage d'aluminium sur du verre et le produit en résultant.

L'invention vise également un pare-brise ou une lunette arrière d'automobile comportant sur sa périphérie un liseré d'aluminium obtenu selon le procédé précité.

On connaît plusieurs procédés pour appliquer un revêtement métallique sur du verre, à savoir : la réduction d'un métal tel que de l'argent par voie chimique qui est largement utilisée pour la fabrication des miroirs, l'évaporation sous vide du métal et la pulvérisation du métal à l'état fondu au moyen d'un pistolet à flamme, tel qu'un pistolet oxyacétylénique.

Ce dernier procédé est principalement utilisé pour pulvériser du cuivre ou un alliage de cuivre sur du verre.

On a déjà réalisé des revêtements d'aluminium sur du verre en utilisant cette technique. Toutefois il a été constaté que l'adhérence de l'aluminium était médiocre et l'aspect de ce revêtement, vu à travers le verre, n'était pas brillant, mais apparaissait piqueté et tâcheté, de sorte que l'utilisation de cette technique est incompatible avec la fabrication de miroirs ou autres articles comportant un revêtement d'aluminium ou d'alliage d'aluminium.

Le but de la présente invention est de remédier à cet inconvénient, en créant un procédé pour appliquer un revêtement d'aluminium ou d'alliage d'aluminium sur du verre dans lequel on pulvérise sur ce verre l'aluminium ou l'alliage d'aluminium à l'état fondu au moyen d'un pistolet à flamme, qui soit de mise en oeuvre facile et qui permette d'obtenir un revêtement d'aluminium ou d'alliage d'aluminium très adhérent et brillant.

Suivant l'invention, ce procédé est caractérisé en ce qu'avant pulvérisation, la surface du verre est portée à une température suffisante pour éliminer les molécules d'eau adsorbées sur cette surface.

La demanderese pense que ces molécules d'eau adsorbées sur la surface du verre sont responsables de la mauvaise adhérence de l'aluminium sur le verre, lorsque cet aluminium est appliqué par pulvérisation au moyen d'un pistolet à flamme.

La demanderesse pense en effet que la présence de ces molécules d'eau à la surface du verre ont pour effet d'oxyder les particules d'aluminium fondues et de transformer celles-ci en oxyde d'aluminium qui se solidifie immédiatement au contact du verre, sans adhérer à celui-ci, en donnant au revêtement un aspect piqueté et tâcheté.

Selon une version avantageuse de l'invention, la surface du verre est portée à une température au moins égale à 150°C.

Cette température est en effet généralement suffisante pour réaliser la désorption des molécules d'eau présentes à la surface du verre.

La limite supérieure de la température de chauffage à la surface du verre n'est pas critique. Cependant, celle-ci devra bien entendu rester en-deçà de la température de fusion de l'aluminium ou de l'alliage d'aluminium utilisé, et inférieure à la température à laquelle on modifie les propriétés mécaniques du verre et/ou on supprime les effets dus à une opération de traitement préalable telle que la trempe.

Grâce au procédé selon l'invention, il est possible de réaliser dans des conditions très avantageuses des miroirs présentant une face revêtue d'aluminium.

Grâce à l'invention, il est également possible de réaliser dans des conditions très avantageuses, des pare-brise ou des lunettes arrières chauffantes comportant à leur périphérie un liseré d'aluminium faisant office d'enjoliveur, ou comportant sur leur surface (dans le cas des lunettes arrières), un circuit de chauffage obtenu

0172103

au moyen de filaments d'aluminium appliqués sur le verre au moyen du procédé selon l'invention.

D'autres particularités et avantages de l'invention apparaîtront encore dans la description ci-après.

Aux dessins annexés, donnés à titre d'exemples non limitatifs :

- la figure 1 est une vue en coupe transversale partielle d'un pare-brise en verre sur la périphérie duquel on applique un liseré d'aluminium réalisé par pulvérisation, conformément au procédé selon l'invention,

- la figure 2 est une vue en plan du pare-brise et du liseré d'aluminium appliqué sur la périphérie de celui-ci,

- la figure 3 est une vue en coupe transversale partielle d'un pare-brise collé sur la carrosserie d'une automobile et comportant sur sa face intérieure un liseré d'aluminium réalisé au moyen du procédé selon l'invention.

L'application principale de la présente invention est de réaliser un liseré d'aluminium à la périphérie d'un pare-brise ou d'une lunette arrière d'automobile, ce liseré d'aluminium étant destiné à faire office d'enjoliveur.

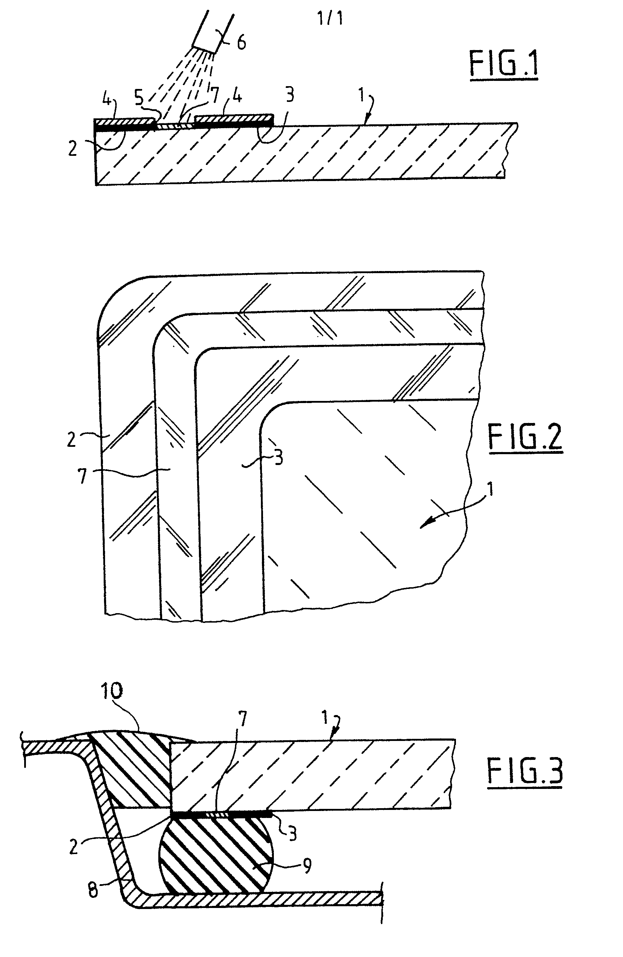

On donne ci-après un exemple de réalisation d'un tel liseré sur un pare-brise 1 (voir figures 1 et 2).

On commence par appliquer sur la périphérie du pare-brise 1, deux bandes parallèles d'émail noir 2, 3 séparées par un espace de quelques millimètres. On recouvre ces deux bandes d'émail 2, 3 par un cache 4 comportant une fente 5 délimitant le liseré que l'on veut obtenir.

On chauffe ensuite le pare-brise 1 à une température au moins égale à 150°C, puis on pulvérise sur la fente 5, c'est-à-dire dans l'espace compris entre les deux bandes d'émail 2 et 3, de l'aluminium à l'état fondu. Cette opération est réalisée au moyen d'un pistolet oxyacétylénique 6 du type METCO 11E utilisant un fil d'aluminium d'épaisseur égale à 3,16 mm.

On forme ainsi un liseré d'aluminium 7 d'épaisseur égale à 12 µ.

Les tests ont montré que la résistance à l'arrachement du liseré d'aluminium est égale à 62 kg/cm², ce qui correspond à une adhérence exceptionnelle.

Les essais ont montré par ailleurs que cette adhérence n'était pas altérée, en soumettant le pare-brise 1 à un traitement thermique à une température atteignant 600°C, à des brusques variations de température et à une atmosphère humide.

Par ailleurs, on constate que l'aspect du liseré 7 est brillant et dépourvu de traces de piqûres, lorsqu'on le regarde par transparence à travers le verre.

Sur la figure 3, on voit que le pare-brise 1 est collé sur le cadre rigide 8 de la carrosserie d'une automobile au moyen d'un cordon 9 en élastomère, de telle sorte que les bandes d'émail 2, 3 et le liseré d'aluminium 7 compris entre celles-ci recouvrent et masquent le cordon 9 dont l'aspect est inesthétique. Ce liseré d'aluminium 7 compris entre les deux bandes d'émail noir 2 et 3, confère à la périphérie du pare-brise 1 un aspect particulièrement attrayant, qui est obtenu dans des conditions de coût très avantageuses.

Par ailleurs, la disposition du liseré d'aluminium 7 entre les deux bandes d'émail 2 et 3, est favorable à l'égard de l'adhérence vis-à-vis du cordon de collage 9.

Pour compléter la finition, un joint de finition 10 est inséré entre la périphérie du pare-brise et le bord du cadre 8.

En procédant de la même manière que celle décrite dans l'exemple précité, on peut pulvériser sur la lunette arrière d'une automobile, des liserés d'aluminium pour former un circuit chauffant de dégivrage. A cet effet, on utilisera un cache comportant des fentes délimitant le circuit de chauffage que l'on veut obtenir.

En chauffant toute la surface d'une feuille de verre à une température au moins égale à 150°C et en pulvérisant sur toute cette surface une couche d'aluminium d'épaisseur comprise entre 10 et 20 µ environ, on peut obtenir un miroir bon marché, présentant une surface réfléchissante d'excellente qualité.

Le revêtement d'aluminium, ou le (les) liseré(s) d'aluminium, peut être pulvérisé sur le verre après trempe de celui-ci et avant que sa température n'ait chûté en dessous de 150°C. On évite ainsi que la surface du verre reprenne de l'humidité lors de son refroidissement.

Dans le cas de l'exemple représenté sur les figures annexées, le chauffage au lieu d'être appliqué sur l'ensemble de la feuille de verre, peut être réalisé uniquement sur la périphérie de cette feuille à l'emplacement où l'on veut réaliser le liseré.

Bien que les essais aient montré qu'il était en général nécessaire de porter la surface du verre à une température au moins égale à 150°C, il est possible que l'on puisse, dans certains cas, chauffer à une température inférieure à la valeur précitée.

En effet, en opérant dans une atmosphère relativement sèche et en utilisant pour l'alimentation du pistolet à flamme des gaz extrêmement secs, on peut éviter qu'un trop grand nombre de molécules d'eau soient adsorbées à la surface du verre, de sorte que leur élimination pourrait être obtenue à une température sensiblement inférieure à 150°C. Cependant, même dans ce cas il est préférable de chauffer le verre à une température au moins égale à 150°C pour éviter un brusque refroidissement de l'aluminium pulvérisé sur le verre qui est néfaste pour l'obtention d'une bonne adhérence.

Dans le cas de la réalisation d'un miroir, on peut pulvériser la couche d'aluminium directement sur la surface du verre, quand celle-ci est sortie du bain d'étain (procédé FLOAT) et est encore à une température inférieure ou égale à 500°C.

6

## REVENDICATIONS

1. Procédé pour appliquer un revêtement d'aluminium ou d'alliage d'aluminium sur du verre, dans lequel on pulvérise sur le verre, l'aluminium ou l'alliage d'aluminium à l'état fondu, au moyen d'un pistolet à flamme, caractérisé en ce qu'avant cette pulvérisation, la surface du verre est portée à une température suffisante pour éliminer les molécules d'eau adsorbées sur cette surface.

2. Procédé conforme à la revendication 1, caractérisé en ce que la surface du verre est portée à une température au moins égale à 150°C.

3. Procédé conforme à l'une des revendications 1 ou 2, appliqué à la réalisation d'un miroir, caractérisé en ce qu'avant pulvérisation de l'aluminium ou de l'alliage d'aluminium, on chauffe toute la surface d'une feuille de verre.

4. Procédé conforme à la revendication 3, caractérisé en ce que l'aluminium est pulvérisé sur le verre, quand ce dernier est sorti du bain d'étain en fusion.

5. Procédé conforme à l'une des revendications 1 ou 2, appliqué à la réalisation d'un liseré en aluminium (7) sur la périphérie d'un pare-brise (1) ou d'une lunette arrière d'automobile, caractérisé en ce qu'on chauffe au moins la périphérie du pare-brise (1) ou de la lunette arrière, on applique sur ce pare-brise ou cette lunette arrière, un cache (4) comportant une fente (5) délimitant le liseré à obtenir et on pulvérise l'aluminium ou l'alliage d'aluminium sur cette fente.

6. Procédé conforme à la revendication 5, caractérisé en ce que le liseré d'aluminium (7) est formé entre deux bandes parallèles d'émail (2, 3) appliquées sur la périphérie du pare-brise (1) ou de la lunette arrière.

7. Procédé conforme à l'une des revendications 1 ou 2, appliqué à la réalisation d'une lunette arrière chauffante, caractérisé en ce qu'on chauffe toute la surface de la lunette arrière, on applique sur cette lunette arrière un cache comportant des fentes délimitant le circuit de chauffage à obtenir, et on pulvérise l'aluminium sur ces fentes.

8. Procédé conforme à l'une des revendications 2 à 7, caractérisé en ce que l'aluminium ou l'alliage d'aluminium est appliqué sur le verre juste avant trempe de celui-ci et avant que la température du verre n'ait chuté en-dessous de 150°C environ.

9. Feuille de verre comportant une couche d'aluminium appliquée sur sa surface, notamment au moyen du procédé conforme à la revendication 1, caractérisée en ce que cette couche adhère au verre et présente un aspect brillant sur sa surface extérieure et sur sa surface en contact avec le verre.

10. Pare-brise (1) ou lunette arrière d'automobile comportant sur sa périphérie un liseré d'aluminium (7) appliqué par pulvérisation, conformément au procédé selon la revendication 4, caractérisé en ce que ce liseré (7) est compris entre deux bandes parallèles d'émail noir (2, 3), ce liseré et ces bandes d'émail étant appliqués sur la face destinée à venir en contact et à recouvrir le cordon (9) prévu pour réaliser le collage du pare-brise (1) ou de la lunette arrière sur la carrosserie (8).

FIG.1

6
4 5 7 4 3 1
2

FIG.2

2
7
3
1

FIG.3

10 7 1
2
8
3
9

## DOCUMENTS CONSIDERES COMME PERTINENTS

| Catégorie | Citation du document avec indication en cas de besoin des parties pertinentes | Revendication concernee | CLASSEMENT DE LA DEMANDE (Int. Cl 4) |
|---|---|---|---|
| X | GB-A- 467 221 (A.H. STEWART)<br>* Figure 1; revendications 1,2,9 * | 1-10 | C 03 C 17/10<br>B 60 R 13/06 |
| Y | US-A-2 559 351 (J.L. DRAKE)<br>* Colonne 3, lignes 15-63; colonne 5, lignes 43-53; figure 9 * | 1-3,5, 7,9 | |
| Y | GB-A-2 086 263 (BFG GLASSGROUP)<br>* Exemple 1 * | 1,5,10 | |
| Y | EP-A-0 081 426 (BOUSSOIS S.A.)<br>* Figures; page 10, lignes 29-31 * | 1-10 | |
| A | FR-A-2 188 025 (SAINT-GOBAIN) | | DOMAINES TECHNIQUES RECHERCHES (Int. Cl 4)<br><br>C 03 C 17/00<br>B 60 R 13/00 |

Le présent rapport de recherche a été établi pour toutes les revendications

| Lieu de la recherche | Date d'achèvement de la recherche | Examinateur |
|---|---|---|
| LA HAYE | 04-11-1985 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82